# EUROPÄISCHE PATENTSCHRIFT

(11) **EP 2 289 123 B1**
(45) Veröffentlichungstag und Bekanntmachung des Hinweises auf die Patenterteilung: **05.09.2012**
(21) Anmeldenummer: 09768981.4
(22) Anmeldetag: 23.06.2009
(51) Int. Cl.: H01M 8/04, H01M 8/02

(54) **BRENNSTOFFZELLENAGGREGAT MIT EINER SPEICHEREINRICHTUNG ZUM SPEICHERN UND ZUM BEREITSTELLEN VON FLÜSSIGEM WASSERKÜHLMITTEL**
FUEL CELL UNIT HAVING A STORAGE UNIT FOR STORING AND PROVIDING LIQUID WATER COOLANT
BLOC-PILE À COMBUSTIBLE AVEC UN DISPOSITIF DE STOCKAGE PERMETTANT DE STOCKER ET DE FOURNIR UN LIQUIDE DE REFROIDISSEMENT AQUEUX

(30) Priorität: 27.06.2008 DE 102008030567
(43) Veröffentlichungstag der Anmeldung: 02.03.2011
(73) Patentinhaber: Bayerische Motoren Werke Aktiengesellschaft, 80809 München (DE)
(72) Erfinder: ARTMANN, Reinhard, 82223 Eichenau (DE)
(86) Internationale Anmeldenummer: PCT/EP2009/004533
(87) Internationale Veröffentlichungsnummer: WO 2009/156132

(56) Entgegenhaltungen:
- JP-A- 2000 208 158
- US-A1- 2006 083 968
- US-A1- 2008 063 902
- US-B1- 6 432 568

## Beschreibung

Die Erfindung betrifft ein Brennstoffzellenaggregat mit mindestens einer Brennstoffzelle, an der ein Kühlkreislauf angeschlossen ist, dem eine Speichereinrichtung zum Speichern und zum Bereitstellen von flüssigem Wasserkühlmittel an der Brennstoffzelle sowohl unter normalen Betriebsbedingungen als auch unter Frostbedingungen zugeordnet ist. Ferner betrifft die Erfindung ein Verfahren zum Betreiben eines Brennstoffzellenaggregats, bei dem an mindestens einer Brennstoffzelle Wasserkühlmittel durch einen Kühlkreislauf gefördert wird, welches in einem den Kühlkreislauf zugeordneten Reservoir gespeichert wird.

Als Beispiele für oben genannte Brennstoffzellenaggregate sind aus DE 103 17 123 B4 eine Brennstoffzelle mit einer Kaltstartvorrichtung und aus DE 11 2004 002 139 T5 ein frosttolerantes Brennstoffzellenleistungsaggregat bekannt. Bei derartigen Brennstoffzellenaggregaten kommt es nach einer längeren Abschaltdauer und einer zusätzlichen Frosteinwirkung zum Einfrieren von Wasserkühlmittel in einer Speichereinrichtung des zugehörigen Kühlkreislaufs. Zum Starten des Brennstoffzellenaggregats muss das derart eingefrorene Wasserkühlmittel geschmolzen werden, wozu ein Heizelement, insbesondere in Gestalt eines Heizers oder Wärmetauschers vorgesehen wird. Wichtig ist dabei, dass das Fassungsvermögen der Speichereinrichtung auf den Wasserbedarf des Brennstoffzellenaggregats bei normalen Betriebsbedingungen abgestimmt ist. Zugleich besteht aber das Problem, dass zum Schmelzen bzw. Auftauen des eingefrorenen Wasserkühlmittels vergleichsweise viel Energie zugeführt werden muss und auch eine vergleichsweise lange Zeit vergeht, bis das Wasserkühlmittel aufgetaut und damit auch das Brennstoffzellenaggregat gestartet werden kann.

Die US 2008/0063902 A1 offenbart ein Brennstoffzellenaggregat, bei welchem bei Frostgefahr das Wasserkühlmittel nicht nur aus der Brennstoffzelle, sondern auch aus einem Reservoir für das Wasserkühlmittel abgelassen wird. Dies macht es jedoch erforderlich, dieses Reservoir zu einem späteren Zeitpunkt wieder zu befüllen, was grundsätzlich einen zusätzlichen Aufwand darstellt.

Der Erfindung liegt die Aufgabe zugrunde, ein Brennstoffzellenaggregat und ein Verfahren zum Betreiben eines Brennstoffzellenaggregats zu schaffen, bei denen die oben genannten Nachteile überwunden sind und insbesondere ein schnelleres Starten des Brennstoffzellenaggregats nach längerer Abschaltdauer und Frosteinwirkung möglich ist.

Die Aufgabe ist erfindungsgemäß mit einem Brennstoffzellenaggregat gemäß Anspruch 1 gelöst. Vorteilhafte Weiterbildungen der Erfindung sind in den abhängigen Ansprüchen beschrieben.

Gemäß der Erfindung ist ein Brennstoffzellenaggregat mit mindestens einer Brennstoffzelle geschaffen, an der ein Kühlkreislauf angeschlossen ist, dem eine Speichereinrichtung zum Speichern und zum Bereitstellen von flüssigem Wasserkühlmittel an der Brennstoffzelle sowohl unter normalen Betriebsbedingungen als auch unter Frostbedingungen zugeordnet ist. Die Speichereinrichtung ist ferner dazu angepasst, unter Frostbedingungen eine kleinere Menge an flüssigem Wasserkühlmittel bereitzustellen, als unter normalen Betriebsbedingungen. Mit der erfindungsgemäß ausgestalteten Speichereinrichtung eines Brennstoffzellenaggregats ist es möglich unter Frostbedingungen eine in Bezug auf normale Betriebsbedingungen kleinere Menge an flüssigem Wasserkühlmittel bereitzustellen. Daher muss erfindungsgemäß auch nur diese kleinere Menge von Wasserkühlmittel vom zunächst eingefrorenen Zustand in den flüssigen Zustand überführt werden. Entsprechend ist zum Auftauen dieser kleineren Menge an flüssigem Wasserkühlmittel weniger Energie notwendig und, dies ist besonders wichtig, auch weniger Zeit erforderlich. Das erfindungsgemäße Brennstoffzellenaggregat kann daher unter Frostbedingungen schneller gestartet werden, als herkömmliche Brennstoffzellenaggregate.

Die Erfindung basiert dabei auf der Erkenntnis, dass es unter Frostbedingungen gar nicht erforderlich ist, eine so große Menge an flüssigem Wasserkühlmittel bereitzustellen, wie unter normalen Betriebsbedingungen. Dies liegt insbesondere daran, dass das zugehörige Brennstoffzellenaggregat mit der mindestens einen Brennstoffzelle ohnehin eine niedrigere Temperatur aufweist, als unter normalen Betriebsbedingungen. Ferner kann während des Starts des Brennstoffzellenaggregats noch weiteres Wasserkühlmittel vom gefrorenen Zustand in den flüssigen Zustand überführt und dann ebenfalls an der mindestens einen Brennstoffzelle bereitgestellt werden. Zum Auftauen dieser weiteren Menge an Wasserkühlmittel kann dabei besonders bevorzugt die Abwärme der mindestens einen, bereits gestarteten Brennstoffzelle genutzt werden. Es ist daher bei einem derart gestalteten erfindungsgemäßen Brennstoffzellenaggregat auch insgesamt weniger Fremdenergie zum Schmelzen des zugehörigen Wasserkühlmittels erforderlich. Das restliche gefrorene Wasserkühlmittel kann also erfindungsgemäß durch im Betrieb der mindestens einen Brennstoffzelle erzeugtes warmes Wasser geschmolzen werden.

Um dies zu ermöglichen, ist die Speichereinrichtung mit einem Reservoir zum Speichern von Wasserkühlmittel gestaltet, das in zwei Teilvolumina geteilt ist, die durch eine wärmeisolierende Schicht getrennt sind. Bei dem derart geteilten Reservoir zum Speichern von Wasserkühlmittel ist es möglich, zunächst nur eines der beiden Teilvolumina aufzutauen, um auch unter Frostbedingungen das zugehörige Brennstoffzellenaggregat nach kurzer Zeit starten zu können.

Als wärmeisolierende Schicht ist bei der derartigen Speichereinrichtung bevorzugt eine Schicht aus Teflon vorgesehen. Diese Art von Schicht weist eine besonders hohe Isolationswirkung bei geringem Raumbedarf auf.

Ferner ist es vorteilhaft, in der wärmeisolierenden Schicht eine Durchgangsöffnung zum Übergang von Wasserkühlmittel aus dem einen Teilvolumen in das andere Teilvolumen auszubilden. Die derartige Durchgangsöffnung ermöglicht ein Nachfließen von geschmolzenem Wasserkühlmittel aus dem zweiten Teilvolumen in das erste Teilvolumen, sodass es lediglich im ersten Teilvolumen einer Absaug- bzw. Abführeinrichtung für flüssiges Wasserkühlmittel bedarf.

Es ist daher ferner erfindungsgemäß auch besonders bevorzugt in einem der Teilvolumina ein Heizelement zum Auftauen des im zugehörigen Teilvolumen befindlichen Wasserkühlmittels vorzusehen, während sich in dem anderen Teilvolumen kein derartiges Heizelement befindet. Bei dieser Ausgestaltungsform wird das Wasserkühlmittel im zweiten Teilvolumen allein durch von der mindestens einen Brennstoffzelle zurückfließendes flüssiges Wasserkühlmittel aufgetaut. Alternativ kann es vorteilhaft sein, in dem zweiten Teilvolumen einen Wärmetauscher vorzusehen, mittels dem überschüssige Wärmeenergie aus der mindestens einen Brennstoffzelle in dieses zweite Teilvolumen überführt wird.

Zusammenfassend ergibt sich mit der erfindungsgemäßen Lösung eine Funktionsverbesserung, weil das erfindungsgemäße Brennstoffzellenaggregat früher elektrische Energie liefern kann und auch früher seine Betriebstemperatur erreicht. Darüber hinaus wird bei entsprechender Ausgestaltung des Brennstoffzellenaggregats weniger zusätzliche Energie für das Erwärmen des Wasserkühlmittels benötigt, was die Energiebilanz des Brennstoffzellenaggregats positiv beeinflusst. Dieser positive Effekt wird nahezu ohne zusätzlichen Aufwand erzielt.

Nachfolgend wird ein Ausführungsbeispiel der erfindungsgemäßen Lösung anhand der beigefügten schematischen Zeichnungen näher erläutert. Es zeigt:
Fig. 1 ein Schaubild eines ersten Ausführungsbeispiels eines erfindungsgemäßen Brennstoffzellenaggregats,
Fig. 2 ein Diagramm des Verlaufs der Temperatur von Wasserkühlmittel bei den Brennstoffzellenaggregaten gemäß Fig. 1 und gemäß dem Stand der Technik.

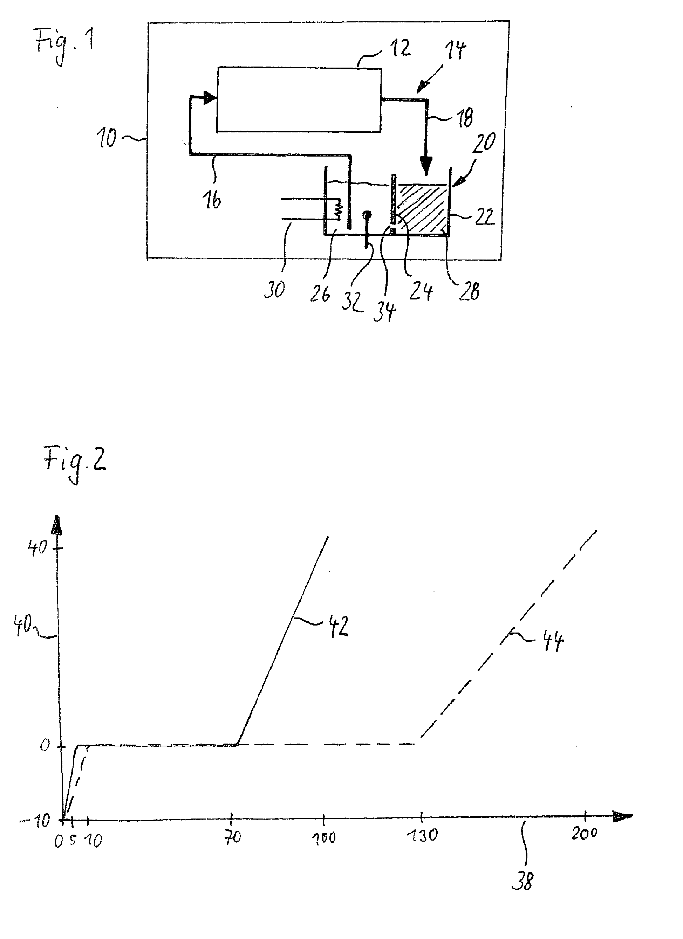

In Fig. 1 ist ein Ausführungsbeispiel eines Brennstoffzellenaggregats 10 dargestellt, bei dem an einer Brennstoffzelle 12 ein Kühlkreislauf 14 angeschlossen ist. Der Kühlkreislauf 14 umfasst eine Einlassleitung 16, die in die Brennstoffzelle 12 hineinführt, sowie eine Auslassleitung 18, mittels der ein Gemisch aus einem wasserunmischbaren Fluid und einem Wasserkühlmittel aus der Brennstoffzelle 12 herausgeführt werden kann. Es ist ferner eine Speichereinrichtung 20 vorgesehen, an der das Gemisch aus Wasserunmischbarem Fluid und Wasserkühlmittel getrennt und das Wasserkühlmittel als solches gespeichert werden kann, um es nachfolgend durch die Einlassleitung 16 wieder an der Brennstoffzelle 12 bereitzustellen. Dazu weist die Speichereinrichtung 20 ein Reservoir 22 auf, in dem sich das Wasserkühlmittel befindet.

In dem Reservoir 22 ist eine isolierende Schicht 24 in Gestalt einer Trennwand ausgebildet, welche das Reservoir 22 in ein erstes Teilvolumen 26 und ein zweites Teilvolumen 28 trennt. Dabei ist das Teilvolumen 26 jenes Teilvolumen, aus dem die Einlassleitung 16 Wasserkühlmittel für die Brennstoffzelle 12 entnimmt, während Wasserkühlmittel aus der Brennstoffzelle 12, welches durch die Auslassleitung 18 kommt, in das Teilvolumen 28 einfließt.

In dem Teilvolumen 26 ist ein Heizelement 30 angeordnet, mittels dem das sich im Teilvolumen 26 befindende Wasserkühlmittel erwärmt werden kann. Zum Steuern dieser Erwärmung ist in dem Teilvolumen 26 ein Temperatursensor 32 angeordnet. In der isolierenden Schicht 24 ist eine Durchgangsöffnung 34 ausgebildet, durch welche Wasserkühlmittel vom Teilvolumen 28 in das Teilvolumen 26 überströmen kann.

Mit dem derart ausgebildeten Reservoir 22 ist es möglich, dass das Brennstoffzellenaggregat 10 unter Frostbedingungen bereits gestartet werden kann, wenn mit dem Heizelement 30 jener Teil an Wasserkühlmittel aufgetaut worden ist, der sich im Teilvolumen 26 befindet. Mit dem derart gestarteten Brennstoffzellenaggregat 10 wird dann durch die Brennstoffzelle 12 hindurch erwärmtes Wasserkühlmittel (und auch erwärmtes wasserunmischbares Fluid) durch die Auslassleitung 18 zurückgefördert, welches in das Teilvolumen 28 gelangt und dann das sich dort befindende Wasserkühlmittel auftaut. Das im Teilvolumen 28 aufgetaute Wasserkühlmittel kann dann durch die Durchgangsöffnung 34 in das Teilvolumen 26 überströmen, von dem es durch die Einlassleitung 16 zur Brennstoffzelle 12 gebracht werden kann.

In Fig. 2 ist veranschaulicht, wie mit dem zugehörigen Verfahren zum Betreiben des Brennstoffzellenaggregats 10 die Zeit zum Starten der zugehörigen Brennstoffzelle 12 verringert werden kann. Dazu ist auf der als Achse 38 gestalteten Abszisse die Zeit in Sekunden aufgetragen, welche vom Beginn des Auftauens des Wasserkühlmittels im Reservoir 22 bis zum eigentlichen Starten der Brennstoffzelle 12 vergeht. Auf der als Temperaturachse 40 gestalteten Ordinate ist in °C die jeweils zugehörige Temperatur des Wasserkühlmittels aufgetragen. Eine durchgezogene Linie 42 veranschaulicht den Verlauf der Temperatur über der Zeit bei einem Schmelzen von nur jener Wassermenge, die sich im Teilvolumen 26 gemäß Fig. 1 befindet. Eine gestrichelte Linie 44 zeigt im Vergleich dazu den Verlauf der Temperatur des Wasserkühlmittels, wie es bei herkömmlichen Brennstoffzellenaggregaten im Reservoir 22 vorhanden wäre bzw. ist.

## Patentansprüche

1. Brennstoffzellenaggregat (10) mit mindestens einer Brennstoffzelle (12), an der ein Kühlkreislauf (14) angeschlossen ist, dem eine Speichereinrichtung (20) zum Speichern und zum Bereitstellen von flüssigem Wasserkühlmittel an der Brennstoffzelle (12) sowohl unter normalen Betriebsbedingungen als auch unter Frostbedingungen zugeordnet ist, wobei die Speichereinrichtung (20) dazu angepasst ist, unter Frostbedingungen eine kleinere Menge an flüssigem Wasserkühlmittel bereitzustellen, als unter normalen Betriebsbedingungen,
**dadurch gekennzeichnet, dass** die Speichereinrichtung (20) mit einem Reservoir (22) zum Speichern von Wasserkühlmittel gestaltet ist, das in zwei Teilvolumen (26; 28) geteilt ist, die durch eine Wärme isolierende Schicht (24) getrennt sind.

2. Brennstoffzellenaggregat nach Anspruch 1,
**dadurch gekennzeichnet, dass** die Wärme isolierende Schicht (24) aus Teflon gestaltet ist.

3. Brennstoffzellenaggregat nach Anspruch 1 oder 2,
**dadurch gekennzeichnet, dass** in der Wärme isolierenden Schicht (24) eine Durchgangsöffnung (34) zum Übergang von Wasserkühlmittel aus dem einen Teilvolumen (28) in das andere Teilvolumen (26) ausgebildet ist.

4. Brennstoffzellenaggregat nach einem der Ansprüche 1 bis 3,
**dadurch gekennzeichnet, dass** in einem der Teilvolumina (26) ein Heizelement (30) zum Auftauen des im zugehörigen Teilvolumen befindlichen Wasserkühlmittels vorgesehen ist.

## Claims

1. A fuel cell unit (10) with at least one fuel cell (12), to which a cooling circuit (14) is connected, with which a storage device (20) for storing and for supplying liquid water coolant to the fuel cell (12), both under normal operating conditions and also under frost conditions, is associated, the storage device (20) being adapted to provide a smaller quantity of liquid water coolant under frost conditions than under normal operating conditions, **characterised in that** the storage device (20) is designed with a reservoir (22) to store water coolant, which is divided into two partial volumes (26; 28), which are separated by a heat-insulating layer (24).

2. A fuel cell unit according to claim 1, **characterised in that** the heat-insulating layer (24) is formed from Teflon.

3. A fuel cell unit according to claim 1 or 2, **characterised in that** a through-opening (34) for the transfer of water coolant from one partial volume (28) into the other partial volume (26) is formed in the heat-insulating layer (24),

4. A fuel cell unit according to any one of claims 1 to 3, **characterised in that** a heating element (30) for thawing the water coolant located in the associated partial volume is provided in one of the partial volumes (26).

## Revendications

1. Bloc-pile à combustible (10) avec au moins une cellule de combustible (12) à laquelle est relié un circuit de refroidissement (14) auquel est associé un dispositif de stockage (20) permettant de stocker et de fournir un liquide de refroidissement aqueux à la cellule de combustible (12) aussi bien dans des conditions d'utilisation normales que par température de gel, le dispositif de stockage (20) étant adapté pour fournir une plus faible quantité de liquide de refroidissement aqueux par température de gel que sous des conditions d'utilisation normales, **caractérisé en ce que**
le dispositif de stockage (20) est réalisé avec un réservoir (22) pour stocker un liquide de refroidissement aqueux divisé en deux volumes partiels (26, 28) séparés par une couche thermiquement isolante (24).

2. Bloc-pile à combustible selon la revendication 1,
**caractérisé en ce que**
la couche thermiquement isolante (24) est en téflon.

3. Bloc-pile à combustible selon la revendication 1 ou 2,
**caractérisé en ce que**
la couche thermiquement isolante (24) comprend un passage (34) pour le passage de liquide de refroidissement aqueux d'un volume partiel (28) dans l'autre volume partiel (26).

4. Bloc-pile à combustible selon les revendications 1 à 3,
**caractérisé en ce que**
l'un des volumes partiels (26) est équipé d'un élément chauffant (30) pour dégeler le liquide de refroidissement aqueux de ce volume partiel.
